# FASCICULE DE BREVET EUROPEEN

(11) **EP 1 106 420 B1**
(45) Date de publication et mention de la délivrance du brevet: **14.10.2009**
(21) Numéro de dépôt: 00403421.1
(22) Date de dépôt: 06.12.2000
(51) Int. Cl.: B60L 3/00

(54) **Relais de protection électrique**
Elektrisches Schutzrelais
Electric protective relay

(30) Priorité: 08.12.1999 FR 9915489
(43) Date de publication de la demande: 13.06.2001
(73) Titulaire: SOCIETE NATIONALE DES CHEMINS DE FER FRANCAIS, F-75009 Paris (FR)
(72) Inventeur: Cheze, Alain, 94000 Creteil (FR); Macor, Bernard, 62140 Wambercourt (FR)
(74) Mandataire: Casalonga, Axel

(56) Documents cités:
- EP-A- 0 826 550
- MARSDEN D J: "FIXED-VOLTAGE THYRISTOR CONVERTOR ROLLING-STOCK TRANSFORMERS TO CONTROL DC TRACTION MOTORS" IEE PROCEEDINGS B. ELECTRICAL POWER APPLICATIONS,GB,INSTITUTION OF ELECTRICAL ENGINEERS. STEVENAGE, vol. 139, no. 3, 1 mai 1992 (1992-05-01), pages 209-219, XP000292491

## Description

La présente invention concerne le domaine de la protection électrique d'engins moteurs ferroviaires, susceptibles d'être alimentés par une source de courant alternatif.

De façon connue, un engin ferroviaire, tel qu'une locomotive, alimenté par un réseau monophasé 25000 volts, comprend un transformateur abaisseur de tension comprenant un ou plusieurs secondaires de tension nominale 1500 volts. Le transformateur est disposé au milieu de la motrice avec de nombreux câblages passant à proximité. En cas d'incident, notamment d'amorçage à la masse du véhicule, un contacteur situé dans le bloc moteur sur une sortie du secondaire 1500 V permet de couper l'alimentation du bloc moteur. Toutefois, le secondaire du transformateur reste sous tension . Si l'amorçage a eu lieu en amont du contacteur celui-ci perdure et n'est pas détecté par le système actuel. On risque dans ce cas de brûler un bloc moteur, voire l'ensemble de la motrice.

Le dispositif actuel de protection contre les mises à la masse accidentelle du circuit de traction est constitué d'un relais polarisé par le pôle positif de la batterie du bloc moteur, et relié au point froid du circuit de traction. Le pôle négatif de la batterie est relié à la masse par une résistance et un disrupteur. Ce dispositif fonctionne dans la plupart des cas, mais ne détecte pas les amorçages dus à une tension de forme alternative.

La présente invention a pour objet de remédier aux problèmes évoqués ci-dessus.

La présente invention a pour objet de proposer un dispositif de protection électrique adapté à des engins alimentés en courant alternatif.

Le dispositif de protection électrique, selon l'invention, est destiné à un engin, du type ferroviaire, comprenant des organes consommateurs d'énergie électrique, l'énergie électrique d'alimentation du ou des blocs moteurs étant fournies sur deux lignes séparées électriquement de la masse de l'engin (châssis et toutes pièces électriquement conductrices qui lui sont reliées).

Ce dispositif de protection comprend un moyen de détection des amorçages à la masse de tension d'origine alternative sur les lignes d'alimentation. On peut ainsi détecter une mise à la masse d'un point chaud du circuit, et également celle d'un point froid. On entend par point froid, un point d'une ligne reliée au secondaire du transformateur d'alimentation et fixée à la masse de l'engin par l'intermédiaire, par exemple, d'une résistance. Un point chaud n'est, au contraire, pas relié à la masse de l'engin et est relié à l'autre borne du secondaire du transformateur.

Dans un mode de réalisation de l'invention, le moyen de détection de courant alternatif comprend un transformateur au secondaire duquel est relié un relais par l'intermédiaire d'un pont redresseur, le primaire du transformateur étant disposé en série entre une ligne d'alimentation et la masse par l'intermédiaire d'une résistance. Cette ligne l'alimentation devient le point froid du circuit de traction. Un condensateur peut être disposé en sortie du secondaire du transformateur. Ce condensateur permet de filtrer de possibles fréquences parasites, notamment en cas d'utilisation d'un hacheur dans les moyens d'alimentation électrique.

Dans un mode de réalisation de l'invention, une résistance est disposée sur ladite ligne d'alimentation, parallèlement au moyen de détection de courant alternatif. La valeur de la résistance déterminera la sensibilité du moyen de détection de courant alternatif.

Dans un mode de réalisation de l'invention, un moyen de détection d'un courant continu de court-circuit passant de ladite ligne d'alimentation vers la masse, est disposé en série avec le moyen de détection de courant alternatif. On peut ainsi détecter un éventuel court-circuit entre ladite ligne d'alimentation et la masse.

Dans un mode de réalisation de l'invention, ladite ligne d'alimentation est reliée à la masse par une impédance, préférablement une résistance ou une capacité.

Dans un mode de réalisation de l'invention, ladite ligne d'alimentation est reliée à la masse par une batterie en série avec un contacteur.

Avantageusement, la batterie est disposée parallèlement à une première impédance et en série avec une deuxième impédance.

Dans un mode de réalisation de l'invention, le moyen de détection de courant alternatif est apte à détecter un courant alternatif supérieur à un seuil prédéterminé dès la première alternance franchissant ledit seuil.

De préférence, le moyen de détection de courant alternatif est relié à des moyens de commande d'isolement d'organe consommateur d'énergie, par exemple d'un bloc-moteur ou d'un des engins en cas d'association de plusieurs engins et si la mise à la masse est à nouveau détectée après isolement d'un bloc-moteur. On peut aussi prévoir des moyens d'interdiction de remise en service de l'engin par inhibition de moyens d'alimentation.

Dans un mode de réalisation de l'invention, les moyens d'alimentation sont à courant alternatif. Les moyens d'alimentation peuvent comprendre un transformateur dont le secondaire est séparé électriquement de la masse formée par l'ensemble de l'engin.

Dans un autre mode de réalisation de l'invention, les moyens d'alimentation sont à courant continu.

La présente invention sera mieux comprise à l'étude de la description détaillée d'un mode de réalisation pris à titre d'exemple nullement limitatif et illustré par les dessins annexés, sur lesquels :

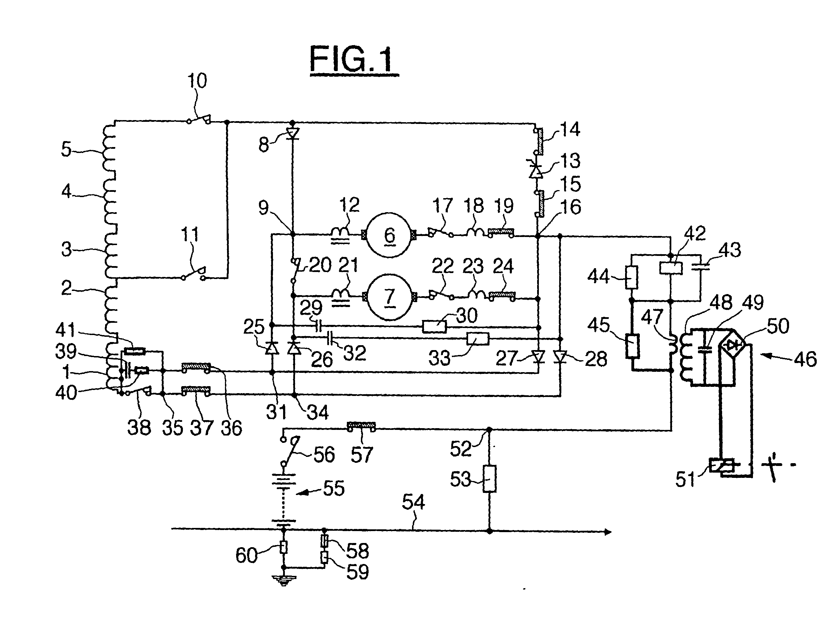

La figure 1 est un schéma électrique de l'implantation d'un dispositif de protection dans le circuit électrique d'un engin ; et
la figure 2 est un schéma simplifié du dispositif de la figure 1.

Du transformateur d'alimentation, on n'a représenté qu'un secondaire qui est prévu pour alimenter les organes consommateurs d'énergie d'un bogie moteur. Le secondaire est divisé en cinq parties référencées 1 à 5 pour permettre de prélever des tensions égales à des fractions de la tension totale du secondaire. Le bogie moteur peut comprendre notamment deux moteurs de traction 6 et 7. Les moteurs 6 et 7 sont alimentés par l'intermédiaire d'un pont mixte à thyristors avec le thyristor 8 du demi-pont supérieur disposé entre la sortie haute du secondaire 5 et le point 9 auquel sont reliés les moteurs 6 et 7.

Un contacteur 10 d'alimentation monophasée du bloc-moteur est disposé entre la sortie haute du secondaire 5 et le thyristor 8. Un autre contacteur il est disposé entre la sortie haute du secondaire 2 et le thyristor 8 pour permettre un fonctionnement sous tension réduite. Entre le point 9 et le moteur 6, est disposé une self de lissage 12. L'autre branche du demi-pont supérieur comprend un thyristor 13 et deux sectionneurs 14 et 15 disposés de part et d'autre du thyristor 13, le thyristor 14 étant relié aux contacteurs 10 et 11 pour l'alimentation et le sectionneur 15 étant relié à un point 16. Entre l'autre borne du moteur 6 et le point 16, sont disposés un contacteur 17, les inducteurs 18 et un sectionneur 19. Le moteur 7 est également relié au point 9 par l'intermédiaire d'un contacteur 20 et d'une self de lissage 21. L'autre borne du moteur 7 est reliée au point 16 par l'intermédiaire d'un contacteur 22, des inducteurs 23 et d'un sectionneur 24.

Le demi-pont inférieur comprend quatre diodes référencées 25, 26, 27 et 28. La diode 25 comprend une borne reliée au point 9 directement et reliée au point 16 par l'intermédiaire d'une capacité 29 et d'une résistance 30, et une autre borne reliée à un point 31. La diode 26 comprend une borne reliée au point commun entre le contacteur 20 et le capteur de courant 21 et également reliée au point 16 par l'intermédiaire d'une capacité 32 et d'une résistance 33, son autre borne étant reliée à un point 34. La diode 27 comprend une borne reliée directement au point 16 et l'autre reliée directement au point 31. La diode 28 comprend une borne reliée directement au point 16 et l'autre reliée directement au point 34.

Le point 31 est relié à un point 35 par un sectionneur 36. Le point 34 et le point 35 sont reliés par l'intermédiaire d'un sectionneur 37.

Le point 35 est relié à la sortie inférieure du secondaire 1 par trois branches parallèles, la première pourvue d'un contacteur 38, la deuxième pourvue d'un circuit RC avec une capacité 39 et une résistance 40 et la troisième pourvue d'une résistance 41.

Les points 31 et 34 forment ce qu'on appelle un point froid, c'est-à-dire relié à la masse de l'engin, tandis que les lignes reliant le thyristor 8 et le sectionneur 14 aux contacteurs 10 et il forment un point chaud soumis à des tensions élevées.

Le point 16 est connecté à un relais 42 en parallèle duquel sont disposées une capacité 43 et une résistance 44. A la borne du relais 42 opposée au point 16, sont connectés en parallèle une résistance 45 et un ensemble-relais référencé 46.

L'ensemble-relais 46 comprend un transformateur d'intensité avec un primaire 47 monté parallèlement à la résistance 45, un secondaire 48 aux bornes duquel sont disposés en parallèle une capacité 49 et un pont redresseur 50. A la sortie du pont redresseur 50, est monté un relais proprement dit référencé 51. La résistance 45 et l'ensemble-relais 46 sont reliés à l'opposé du relais 42 à un point 52. Le point 52 est relié à une résistance 53 dont l'autre borne est reliée à une ligne 54 qui peut être commune à plusieurs engins. La résistance 53 sert à fixer le potentiel du transformateur principal à la masse. Le point 52 est également relié aux batteries de l'engin référencées 55 dans leur ensemble, par l'intermédiaire d'un contacteur de batteries 56 et d'un sectionneur 57. Le point 52 est relié au pôle positif des batteries 55, tandis que le pôle négatif est relié à la ligne 54. Enfin, la ligne 54 est reliée à la masse mécanique de l'engin par l'intermédiaire d'une résistance 60 en parallèle de laquelle sont disposés un microdisjoncteur 58 de signalisation d'une masse batterie et une résistance 59. Les résistances 60 et 59 servent à fixer le potentiel des masses sur la borne négative des batteries 55.

Si un point froid, par exemple le point 34, est mis accidentellement à la masse mécanique de l'engin, la circulation de courant sera détectée par le relais 42 qui pourra provoquer un isolement convenable. Toutefois, en cas de mise à la masse d'un point chaud, le courant alternatif passant dans le relais 42 empêchera son bon fonctionnement d'où une absence de détection de la mise à la masse et un risque d'incendie. Au contraire, l'isolement galvanique obtenu grâce au transformateur d'intensité de l'ensemble relais 46 avec son primaire 47 et son secondaire 48 et au pont redresseur 50, permettra au relais 51 de fonctionner et donc de provoquer les isolements nécessaires, par exemple par actionnement du contacteur 10.

Le relais 42 est alimenté par les batteries 55 dès la sélection d'un sens de marche par le conducteur de l'engin et ce par fermeture du contacteur 56. Le relais 42 est connecté en sortie au point froid 52 du circuit de puissance. Le relais 42 a pour but de détecter une mise à la masse sur le circuit de puissance du bloc-moteur, et en phase de traction, d'ouvrir un disjoncteur monophasé et d'isoler le bloc-moteur, en phase de freinage ou de marche sur l'erre, d'isoler le bloc-moteur, et en phase d'arrêt de fixer le potentiel des secondaires du transformateur par l'intermédiaire de la résistance 53 si le sectionneur traction-freinage 14 est sur freinage ou sur l'erre.

En phase de fonctionnement de traction et dans l'hypothèse d'une mise à la masse d'un point chaud, le relais 42 est soumis à la tension alternative de sortie du secondaire du transformateur principal par la masse et principalement par les résistances 60 et 59 et par le microdisjoncteur 58 et les batteries 55, la résistance 53 se trouvant en parallèle sur les batteries 55 et sur l'ensemble formé par les résistances 60 et 59 et par le microdisjoncteur 58. Le relais 42 est également soumis à la tension continue des batteries 55 qui retrouve la masse du circuit de traction et revient au pôle négatif des batteries par l'ensemble des résistances 60 et 59 et du microdisjoncteur 58.

En cas de mise à la masse du côté point froid, le relais 42 est soumis à une tension alternative nulle et à la tension continue des batteries 55 qui retrouve la masse du circuit de traction et revient au pôle négatif des batteries par l'ensemble des résistances 60 et 59 et du microdisjoncteur 58.

En freinage et dans le cas d'une mise à la masse du côté point chaud du circuit, le relais 42 est soumis à la tension continue fournie par le moteur électrique 6 ou 7 (1000 volts environ) en régime stabilisé, par la masse, principalement par les résistances 60 et 59, le microdisjoncteur 58 et les batteries 55 avec la résistance 53 en parallèle. La tension des batteries 55 vient s'ajouter à celle du moteur 6 ou 7 fonctionnant en génératrice. En cas de mise à la masse côté point froid du circuit, le relais 42 est soumis à la tension continue des batteries 55 qui retrouve la masse du circuit et revient au négatif des batteries par les résistances 60 et 59 et le microdisjoncteur 58.

Dans une étape de maintien en service ou à la mise en service, le relais 42 est inactif, le contacteur 56 étant ouvert. En fonctionnement en traction et en cas de mise à la masse d'un point chaud, la bobine du relais 42 doit fournir une puissance d'environ 900 watts jusqu'à l'ouverture du disjoncteur, pendant une durée approximative de 100 ms. Pendant cette durée, la résistance 44 est sollicitée pour une puissance de 3850 watts, supérieure à sa puissance nominale. De plus, si la mise à la masse persiste après refermeture du disjoncteur principal, ces puissances sont demandées en permanence malgré l'isolement du bloc-moteur, le relais 42 n'ayant plus d'effet sur l'ouverture du disjoncteur, car son contact est shunté par le contact auxiliaire repos du contacteur 17 ou du contacteur 22. Les conséquences de cette inaction sur défauts peuvent aller jusqu' à l'incendie de la motrice.

En cas de mise à la masse d'un point chaud en freinage, la résistance 44 doit supporter une puissance d'environ 440 watts jusqu'au basculement d'un relais d'isolement de moteur, soit pendant une durée d'environ 200 ms. Pendant cette durée, la résistance 44 est sollicitée pour une puissance de 1960 watts. La remise en service du bloc-moteur isolé peut être commandée depuis la cabine de conduite de manière illimitée, ce qui peut conduire à de nouvelles sollicitations du relais 42. Si la mise à la masse persiste après refermeture du disjoncteur principal, ces puissances doivent être supportées par le relais 42 en permanence, malgré l'isolement du bloc-moteur. Le relais 42 n'a plus d'effet sur l'ouverture du disjoncteur, car son contact est shunté par le contact repos du contacteur 17 ou du contacteur 22.

Selon l'invention, la disposition de l'ensemble-relais 46 permet d'éviter les inconvénients qui viennent d'être décrits. L'ensemble-relais 46 comprend une capacité 49, par exemple de 2,2 µF, qui, aux bornes du secondaire 48, filtre les fréquences parasites typiquement de 300 et 600 Hz générées dans le circuit par les hacheurs principaux en phase de freinage. La résistance 45 en parallèle sur le primaire 47, permet de régler l'intensité d'enclenchement du système. Elle peut par exemple être réglée à 47 Ohms.

Les caractéristiques de l'ensemble-résistance 45 et l'ensemble-relais 46 à 50 Hz - sont les suivantes :
impédance : 22 Ohms;
tension secondaire après redressement : 6,7 volts;
seuil de déclenchement, courant primaire seul : 58 mA;
tension au secondaire après redressement : 3,3 volts.

En cas de mise à la masse d'origine alternative sur un point chaud, par exemple entre le contacteur 10 et le sectionneur 14 ou entre le contacteur 10 et le thyristor 8, le courant de fuite à la masse traverse le primaire 47 du transformateur d'intensité de l'ensemble relais 46 et le relais 51 commande l'isolement du bloc-moteur. Si, après isolement du bloc-moteur, la mise à la masse apparaît de nouveau avec réenclenchement du disjoncteur principal, ou persiste, le disjoncteur principal n'étant plus ouvert dans le cas d'un bloc-moteur en freinage ou sur l'erre ou sur position isolée, le disjoncteur principal sera ouvert par la commande du relais d'isolement d'un sectionneur de toiture de l'engin, le sectionneur haute tension sera isolé par un relais d'isolement, la fermeture du disjoncteur se trouvant dans l'engin sera verrouillée pour interdire toute utilisation dudit engin lors d'une éventuelle manoeuvre d'un interrupteur de commande des pantographes. Le réarmement du système peut être obtenu par la manoeuvre d'un bouton-poussoir d'annulation d'isolement de bloc commun.

Ainsi, en cas de détection d'une mise à la masse d'origine alternative, il y a enclenchement de l'ensemble relais 46 qui commande un relais de substitution, non représenté, apte à être commandé par le relais 42 et par le relais 51. Après isolement du bloc-moteur, l'ensemble relais 46 s'enclenche de nouveau et arme un temporisateur, non représenté, réglé à une durée de 0,25 seconde, lequel enclenche un actionneur qui commande le disjoncteur principal, l'isolement du sectionneur haute tension précité par un relais d'isolement, l'isolement du disjoncteur principal de la motrice qui a l'avarie de masse, par un relais d'isolement de disjoncteur principal bistable, ce relais bistable permettant d'interdire l'utilisation de l'engin même lors d'une manoeuvre d'un interrupteur de commande de pantographes, et une signalisation du microdisjoncteur 58 au bloc commun.

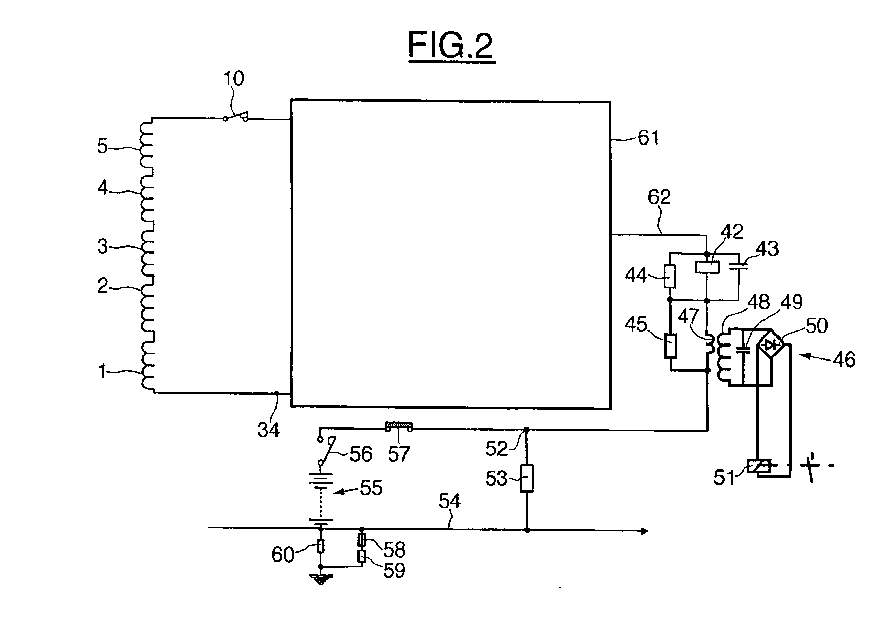

Sur la figure 2, on a représenté un ensemble 61 regroupant les blocs moteurs, les protections et les ponts associés. L'ensemble 61 qui forme un organe consommateur d'énergie est alimenté par les deux bornes du secondaire par l'intermédiaire du contacteur 10. Une sortie 62 est reliée au relais 46 et à l'ensemble relais 50 comme expliqué précédemment. La sortie 62 peut être prise à une borne d'un moteur.

Grâce à l'invention, on protège et on surveille les blocs-moteurs, et les secondaires du transformateur dès que l'engin est sous tension alternative en traction, en freinage, sur l'erre, non utilisé, en maintien de service ou avec bloc-moteur isolé par un relais d'isolement de moteur ou par un interrupteur d'isolement de bloc-moteur. On parvient ainsi à éviter des destructions importantes, voire complètes d'un engin lors d'une mise à la masse d'un point chaud du circuit.

## Revendications

1. Dispositif de protection électrique d'un engin, du type ferroviaire, comprenant des organes consommateurs d'énergie électrique (6, 7) et des moyens d'alimentation électrique (1 à 5), l'énergie électrique d'alimentation des organes consommateurs d'énergie étant fournie sur deux lignes séparées électriquement de la masse de l'engin, **caractérisé par le fait qu'**il comprend un moyen de détection des amorçages à la masse de tension d'origine alternative sur les lignes d'alimentation.

2. Dispositif selon la revendication 1, **caractérisé par le fait que** le moyen de détection de courant alternatif comprend un transformateur au secondaire duquel est relié un relais (51) par l'intermédiaire d'un pont redresseur (50), le primaire du transformateur étant disposé en série entre une ligne d'alimentation et la masse par l'intermédiaire d'une résistance.

3. Dispositif selon la revendication 2, **caractérisé par le fait qu'**un condensateur (49) est disposé en sortie du secondaire du transformateur.

4. Dispositif selon l'une quelconque des revendications précédentes, **caractérisé par le fait qu'**une résistance (45) est disposée sur ladite ligne d'alimentation, parallèlement au moyen de détection de courant alternatif.

5. Dispositif selon l'une quelconque des revendications précédentes, **caractérisé par le fait qu'**un moyen de détection (42) d'un courant continu de court-circuit passant de ladite ligne d'alimentation vers la masse est disposé en série avec le moyen de détection de courant alternatif.

6. Dispositif selon l'une quelconque des revendications précédentes, **caractérisé par le fait que** ladite ligne d'alimentation est reliée à la masse par une impédance.

7. Dispositif selon l'une quelconque des revendications précédentes, **caractérisé par le fait que** ladite ligne d'alimentation est reliée à la masse par une batterie (55) en série avec un contacteur (56).

8. Dispositif selon les revendications 6 et 7, **caractérisé par le fait que** la batterie est disposée parallèlement à une première impédance (53) et en série avec une deuxième impédance (57).

9. Dispositif selon l'une quelconque des revendications précédentes, **caractérisé par le fait que** le moyen de détection de courant alternatif est apte à détecter un courant alternatif supérieur à un seuil prédéterminé dès la première alternance franchissant ledit seuil.

10. Dispositif selon l'une quelconque des revendications précédentes, **caractérisé par le fait que** le moyen de détection de courant alternatif est relié à des moyens de commande d'isolement d'organes consommateurs d'énergie.

11. Dispositif selon l'une quelconque des revendications précédentes, **caractérisé par le fait que** les moyens d'alimentation sont à courant alternatif.

12. Dispositif selon l'une quelconque des revendications 1 à 10, **caractérisé par le fait que** les moyens d'alimentation sont à courant continu.

## Claims

1. Electrical protection device for protecting a railroad vehicle, including electrical energy consuming units (6, 7) and electrical power supply means (1 to 5), electrical energy being supplied to the energy consuming units on two lines electrically separated from the vehicle ground, **characterized in that** it includes means for detecting an AC disruptive discharge on the power supply line.

2. Device according to Claim 1, **characterized in that** the alternating current detector means include a transformer whose secondary is connected to a relay (51) via a rectifier bridge (50) and the primary of the transformer is connected in series between a power supply line and ground via a resistor.

3. Device according to Claim 2, **characterized in that** a capacitor (49) is connected to the output of the secondary of the transformer.

4. Device according to any preceding claim, **characterized in that** a resistor (45) is connected to said power supply line in parallel with the alternating current detector means.

5. Device according to any preceding claim, **characterized in that** detector means (42) for detecting a short circuit direct current flowing in said power supply line towards ground are connected in series with the alternating current detector means.

6. Device according to any preceding claim, **characterized in that** said power supply line is connected to ground via an impedance.

7. Device according to any preceding claim, **characterized in that** said power supply line is connected to ground via a battery (55) in series with a contactor (56).

8. Device according to either Claim 6 or Claim 7, **characterized in that** the battery is connected in parallel with a first impedance (53) and in series with a second impedance (57).

9. Device according to any preceding claim, **characterized in that** the alternating current detector means are adapted to detect an alternating current greater than a predetermined threshold during the first cycle crossing said threshold.

10. Device according to any preceding claim, **characterized in that** the alternating current detector means are connected to means for commanding isolation of said energy consuming units.

11. Device according to any preceding claim, **characterized in that** the power supply means are alternating current power supply means.

12. Device according to any of Claims 1 to 10, **characterized in that** the power supply means are direct current power supply means.

## Patentansprüche

1. Elektrische Schutzvorrichtung für eine Transportmaschine des Schienenfahrzeugtyps, die elektrische Energie verbrauchende Organen (6, 7) und Mittel (1 bis 5) zur elektrischen Versorgung enthält, wobei die elektrische Energie zur Versorgung der Energieverbraucherorgane auf zwei von der Masse der Transportmaschine elektrisch getrennten Leitungen zugeführt wird, **dadurch gekennzeichnet, dass** sie ein Mittel zum Erfassen von Durchschlagsentladungen zur Masse der Ausgangswechselspannung auf den Versorgungsleitungen enthält.

2. Vorrichtung nach Anspruch 1, **dadurch gekennzeichnet, dass** das Wechselstrom-Erfassungsmittel einen Transformator enthält, dessen Sekundärwicklung über eine Gleichrichterbrücke (50) mit einem Relais (51) verbunden ist, wobei die Primärwicklung des Transformators zwischen einer Versorgungsleitung und Masse über einen Widerstand in Reihe geschaltet ist.

3. Vorrichtung nach Anspruch 2, **dadurch gekennzeichnet, dass** am Ausgang der Sekundärwicklung des Transformators ein Kondensator (49) angeordnet ist.

4. Vorrichtung nach einem der vorhergehenden Ansprüche, **dadurch gekennzeichnet, dass** in der Versorgungsleitung parallel zu dem Wechselstrom-Erfassungsmittel ein Widerstand (45) angeordnet ist.

5. Vorrichtung nach einem der vorhergehenden Ansprüche, **dadurch gekennzeichnet, dass** mit dem Wechselstrom-Erfassungsmittel ein Mittel (42) zum Erfassen eines von der Versorgungsleitung zur Masse fließenden Kurzschluss-Gleichstroms in Reihe geschaltet ist.

6. Vorrichtung nach einem der vorhergehenden Ansprüche, **dadurch gekennzeichnet, dass** die Versorgungsleitung über eine Impedanz mit Masse verbunden ist.

7. Vorrichtung nach einem der vorhergehenden Ansprüche, **dadurch gekennzeichnet, dass** die Versorgungsleitung über eine Batterie (55), die mit einem Schaltschütz (56) in Reihe geschaltet ist, mit Masse verbunden ist.

8. Vorrichtung nach den Ansprüchen 6 und 7, **dadurch gekennzeichnet, dass** die Batterie zu einer ersten Impedanz (53) parallel geschaltet und mit einer zweiten Impedanz (57) in Reihe geschaltet ist.

9. Vorrichtung nach einem der vorhergehenden Ansprüche, **dadurch gekennzeichnet, dass** das Wechselstrom-Erfassungsmittel einen Wechselstrom, der größer als ein vorgegebener Schwellenwert ist, ab der ersten Halbperiode über dem Schwellenwert erfassen kann.

10. Vorrichtung nach einem der vorhergehenden Ansprüche, **dadurch gekennzeichnet, dass** das Wechselstrom-Erfassungsmittel mit Mitteln zum Steuern der Trennung von Energieverbraucherorganen verbunden ist.

11. Vorrichtung nach einem der vorhergehenden Ansprüche, **dadurch gekennzeichnet, dass** die Versorgungsmittel mit Wechselstrom arbeiten.

12. Vorrichtung nach einem der Ansprüche 1 bis 10, **dadurch gekennzeichnet, dass** die Versorgungsmittel mit Gleichstrom arbeiten.
